# EUROPÄISCHE PATENTANMELDUNG

(11) **EP 3 483 023 A1**
(43) Veröffentlichungstag der Anmeldung: **15.05.2019**
(21) Anmeldenummer: 18202560.1
(22) Anmeldetag: 25.10.2018
(51) Int. Cl.: B60W 30/18, B60W 10/02, B60W 10/06, B60W 30/188

(54) **VERFAHREN ZUR UNTERSTÜTZUNG DES ANFAHRENS FÜR EIN DURCH EINEN MOTOR ANGETRIEBENES FAHRZEUG**

(30) Priorität: 09.11.2017 DE 102017219971
(71) Anmelder: ZF Friedrichshafen AG, 88046 Friedrichshafen (DE)
(72) Erfinder: Pilzweger, Hans, 94152 Neuhaus am Inn (DE); Stöbich, Alexander, 94110 Wegscheid (DE)

(57) **Zusammenfassung**

Die Erfindung bezieht sich auf ein Verfahren zur Unterstützung des Anfahrens für ein durch einen Motor angetriebenes Fahrzeug mit einem Start-Stopp-System, das durch Betätigung eines Bremspedals bremsbar ist, mit einer von einem Modulationsdruck beaufschlagbaren Hauptkupplung, mit einem Gaspedal zur manuellen Einstellung einer Drehzahl des Motors und mit einer Motorsteuereinheit zur Steuerung des Betriebs des Motors, gekennzeichnet durch folgende Schritte,
- erfassen des Loslassens des Bremspedals nach einem Start-Stop-Vorgang,
- ermitteln des Modulationsdrucks der Hauptkupplung,
- ermitteln eines benötigten Drehmoments aus dem ermittelten Modulationsdruck anhand einer gespeicherten Modulationsdruck - Drehmoment-Kennlinie,
- ermitteln der benötigten Drehzahlanforderung des Motors aus dem ermittelten benötigten Drehmoment anhand einer gespeicherten Drehmoment-Kennlinie des Motors,
- abfragen, ob die benötigte Drehzahlanforderung größer ist als das verfügbare Drehmoment bei der aktuellen Motordrehzahl des Motors,
- wenn nein, dann keine Ansteuerung zur Erhöhung der Drehzahl des Motors,
- wenn ja Abfrage, ob die benötigte Drehzahlanforderung größer ist, als die angeforderte Drehzahl entsprechend der Stellung des Gaspedals,
- wenn nein, dann anheben der Drehzahl des Motors durch die Motorsteuereinheit auf die ermittelte Drehzahlanforderung des Motors,
- wenn ja, dann anheben der Drehzahl des Motors durch die Motorsteuereinheit auf maximal die am Gaspedal eingestellte Drehzahl des Motors.

## Beschreibung

Die Erfindung bezieht sich auf ein Verfahren zur Unterstützung des Anfahrens für ein durch einen Motor angetriebenes Fahrzeug mit einem Start-Stopp-System, das durch Betätigung eines Bremspedals bremsbar ist, mit einer von einem Modulationsdruck beaufschlagbaren Hauptkupplung, mit einem Gaspedal zur manuellen Einstellung einer Drehzahl des Motors und mit einer Motorsteuereinheit zur Steuerung des Betriebs des Motors.

Bei einem Anfahrvorgang muß der Fahrer die Motordrehzahl bzw. das Motordrehmoment manuell erhöhen, damit der Motor unter Last wie z.B. bei einem Anfahrvorgang am Berg nicht abgewürgt wird. Das Fahrzeug könnte sonst zurückrollen und auf andere Fahrzeuge auffahren.

Aufgabe der Erfindung ist es daher ein Verfahren zur Unterstützung des Anfahrens für ein durch einen Motor angetriebenes Fahrzeug der eingangs genannten Art zu schaffen, durch das der Motor bei einem Anfahren unter Last nicht abgwürgt wird.

Diese Aufgabe wird erfindungsgemäß durch folgende Schritte gelöst,
- erfassen des Loslassens des Bremspedals nach einem Start-Stop-Vorgang,
- ermitteln des Modulationsdrucks der Hauptkupplung,
- ermitteln eines benötigten Drehmoments aus dem ermittelten Modulationsdruck anhand einer gespeicherten Modulationsdruck - Drehmoment-Kennlinie,
- ermitteln der benötigten Drehzahlanforderung des Motors aus dem ermittelten benötigten Drehmoment anhand einer gespeicherten Drehmoment-Kennlinie des Motors,
- abfragen, ob die benötigte Drehzahlanforderung größer ist als das verfügbare Drehmoment bei der aktuellen Motordrehzahl des Motors,
- wenn nein, dann keine Ansteuerung zur Erhöhung der Drehzahl des Motors,
- wenn ja Abfrage, ob die benötigte Drehzahlanforderung größer ist, als die angeforderte Drehzahl entsprechend der Stellung des Gaspedals,
- wenn nein, dann anheben der Drehzahl des Motors durch die Motorsteuereinheit auf die ermittelte Drehzahlanforderung des Motors,
- wenn ja, dann anheben der Drehzahl des Motors durch die Motorsteuereinheit auf maximal die am Gaspedal eingestellte Drehzahl des Motors.

Durch diese Ausbildung wird automatisch erkannt, ob die Drehzahl beim Anfahrvorgang angehoben werden muß, damit ein Abwürgen des Motors verhindert werden kann. Der Fahrer muß dann nicht mehr manuell eingreifen, da, wenn erforderlich, eine automatische Drehzahlerhöhung bei einem Anfahrvorgang erfolgt.

Dabei kann in einfacher Weise das Erfassen des Loslassens des Bremspedals durch das Öffnen eines Bremslichtschalters eines Bremslichts erfolgen.

Ein Ausführungsbeispiel der Erfindung ist in der Zeichnung dargestellt und wird im Folgenden näher beschrieben. Es zeigen:
- Figur 1: ein Programmablaufplan eines Verfahrens zur Unterstützung des Anfahrens für ein durch einen Motor angetriebenes Fahrzeug mit einem Start-Stopp-System
- Figur 2: ein Diagramm der Kennlinie des Modulationsdruckes über der Zeit einer Hauptkupplung des Verfahrens nach Figur 1
- Figur 3: ein Diagramm der Kennlinie des Drehmoments eines Motors über dem Modulationsdruck nach Figur 2
- Figur 4: ein Diagramm der Kennlinie des Drehmoments des Motors über der Drehzahl Motors des Verfahrens nach Figur 1.

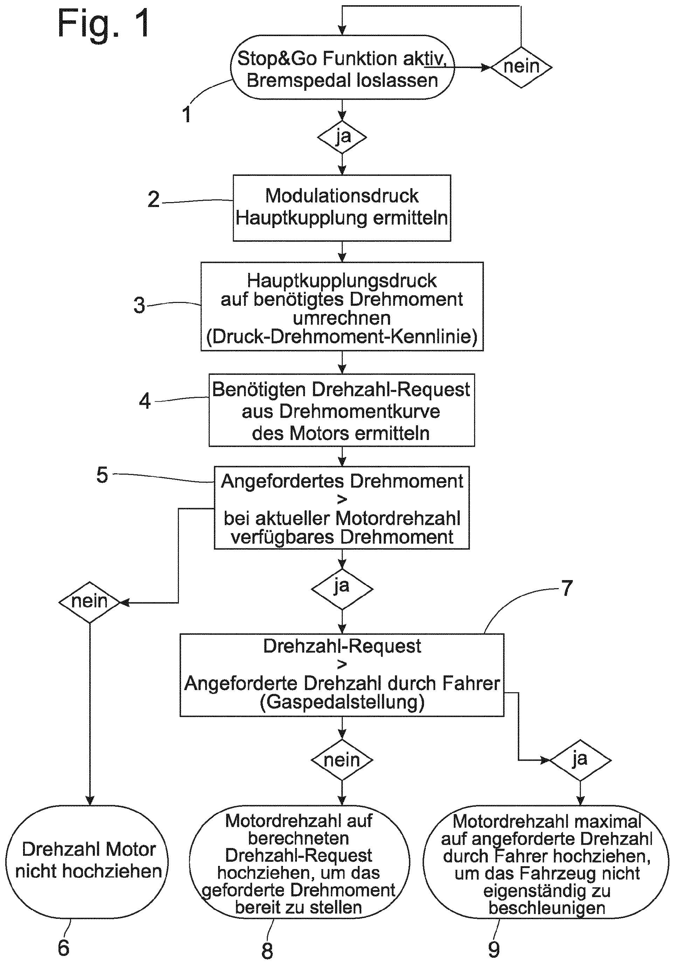

Nach dem in Figur 1 dargestellten Programmlaufplan wird das Verfahren zur Unterstützung des Anfahrens für ein durch einen Motor angetriebenes Fahrzeug mit einem Start-Stopp-System dadurch in Schritt 1 ausgelöst, daß nach einem Start-Stopp-Vorgang ein vorher betätigtes Bremspedal einer Bremse losgelassen, also die Bremse gelöst wird.

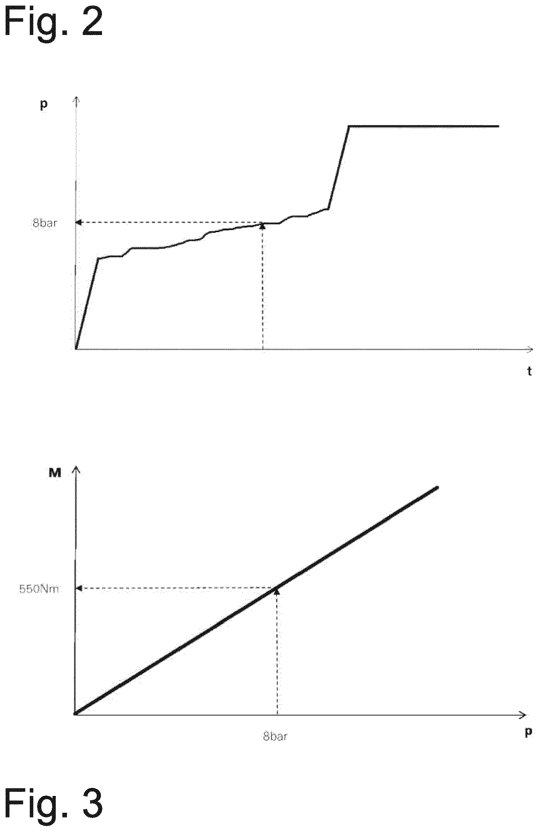

Ist das Loslassen des Bremspedals erfaßt worden, wird in einem Schritt 2 aus einer in einer Motorsteuereinheit des Motors gespeicherten Kennlinie des Modulationsdruckes über der Zeit einer Hauptkupplung (Figur 2) der Modulationsdruck einer Hauptkupplung ermittelt. Im vorliegenden Beispiel wird ein aktueller Modulationsdruck von 8 bar erfaßt.

Anschließend wird in einem Schritt 3 aus dem ermittelten Modulationsdruck von 8 bar anhand einer in der Motorsteuereinheit des Motors gespeicherten Kennlinie des Drehmoments über dem Modulationsdruck (Figur 3) das maximal übertragbare Drehmoment des Motors ermittelt, was im vorliegenden Beispiel 550 Nm beträgt.

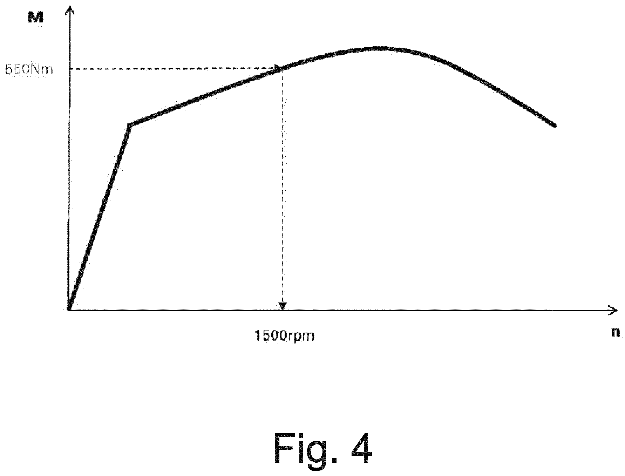

In einem Schritt 4 wird dann aus einer in der Motorsteuereinheit des Motors gespeicherten Kennlinie des Drehmoments des Motors über der Drehzahl Motors (Figur 4) die Drehzahl des Motors ermittelt, die für das maximal übertragbare Drehmoment des Motors erforderlich ist. Dies ist bei einem ermittelten Drehmoment von 550 Nm eine Drehzahl von 1500 rpm.

Nun wird in einem Schritt 5 überprüft, ob das erforderliche Drehmoment von 550 Nm größer oder kleiner ist als das bei der aktuellen Drehzahl von 1500 rpm verfügbare Drehmoment.

Ist das erforderliche Drehmoment von 550 Nm kleiner ist als das bei der aktuellen Drehzahl von 1500 rpm verfügbare Drehmoment, so erfolgt in einem Schritt 6 keine Ansteuerung des Motors durch die Motorsteuereinheit zur einer Erhöhung der Drehzahl des Motors.

Ist das erforderliche Drehmoment von 550 Nm größer als das bei der aktuellen Drehzahl von 1500 rpm verfügbare Drehmoment, so wird in einem Schritt 7 überprüft, ob die benötigte Drehzahlanforderung größer oder kleiner ist, als die angeforderte Drehzahl entsprechend der Stellung des Gaspedals.

Ist die benötigte Drehzahlanforderung kleiner ist, als die angeforderte Drehzahl entsprechend der Stellung des Gaspedals, so wird in einem Schritt 8 durch die Motorsteuereinheit die Drehzahl des Motors auf die ermittelte Drehzahlanforderung des Motors angehoben um das geforderte Drehmoment bereit zu stellen.

Ist die benötigte Drehzahlanforderung größer, als die angeforderte Drehzahl entsprechend der Stellung des Gaspedals, so wird in einem Schritt 9 durch die Motorsteuereinheit die Motordrehzahl maximal auf die Drehzahl angehoben, die von dem Fahrer mittels der Gaspedalstellung vorgegeben ist. Damit kommt es nicht zu einem eigenständigen Beschleunigen des Fahrzeugs.

Durch das erfindungsgemäße Verfahren wird während des Anfahrvorgangs somit die Motordrehzahl so angepaßt, daß das von der Hauptkupplung zu jedem Zeitpunkt das aktuell übertragbare Drehmoment des Motors zur Verfügung steht.

### Bezugszeichen

- 1: Schritt 1
- 2: Schritt 2
- 3: Schritt 3
- 4: Schritt 4
- 5: Schritt 5
- 6: Schritt 6
- 7: Schritt 7
- 8: Schritt 8
- 9: Schritt 9

## Patentansprüche

1. Verfahren zur Unterstützung des Anfahrens für ein durch einen Motor angetriebenes Fahrzeug mit einem Start-Stopp-System, das durch Betätigung eines Bremspedals bremsbar ist, mit einer von einem Modulationsdruck beaufschlagbaren Hauptkupplung, mit einem Gaspedal zur manuellen Einstellung einer Drehzahl des Motors und mit einer Motorsteuereinheit zur Steuerung des Betriebs des Motors, **gekennzeichnet durch** folgende Schritte,
- erfassen des Loslassens des Bremspedals nach einem Start-Stop-Vorgang,
- ermitteln des Modulationsdrucks der Hauptkupplung,
- ermitteln eines benötigten Drehmoments aus dem ermittelten Modulationsdruck anhand einer gespeicherten Modulationsdruck - Drehmoment-Kennlinie,
- ermitteln der benötigten Drehzahlanforderung des Motors aus dem ermittelten benötigten Drehmoment anhand einer gespeicherten Drehmoment-Kennlinie des Motors,
- abfragen, ob die benötigte Drehzahlanforderung größer ist als das verfügbare Drehmoment bei der aktuellen Motordrehzahl des Motors,
- wenn nein, dann keine Ansteuerung zur Erhöhung der Drehzahl des Motors,
- wenn ja Abfrage, ob die benötigte Drehzahlanforderung größer ist, als die angeforderte Drehzahl entsprechend der Stellung des Gaspedals,
- wenn nein, dann anheben der Drehzahl des Motors durch die Motorsteuereinheit auf die ermittelte Drehzahlanforderung des Motors,
- wenn ja, dann anheben der Drehzahl des Motors durch die Motorsteuereinheit auf maximal die am Gaspedal eingestellte Drehzahl des Motors.

2. Verfahren nach Anspruch 1, **dadurch gekennzeichnet, dass** das Erfassen des Loslassens des Bremspedals durch das Öffnen eines Bremslichtschalters eines Bremslichts erfolgt.
